# EUROPEAN PATENT APPLICATION

(11) **EP 4 826 815 A1**
(43) Date of publication of application: **21.10.2026**
(21) Application number: 25895276.1
(22) Date of filing: 19.09.2025
(51) Int. Cl.: H01M 10/04, H01M 10/0562

(54) **BATTERY PACK AND DEVICE INCLUDING SAME**

(30) Priority: 25.11.2024 KR 20240169601
(71) Applicant: LG Energy Solution, Ltd., Seoul 07335 (KR)
(72) Inventor: LEE, Daeyeong, Daejeon 34122 (KR); KIM, Jae Yeong, Daejeon 34122 (KR)
(74) Representative: BCKIP Part mbB
(86) International application number: PCT/KR2025/014625
(87) International publication number: WO 2026/111144

(57) **Abstract**

A battery pack according to an embodiment of the present disclosure comprise: first and second battery cell stacks formed by stacking a plurality of battery cells; a pack case configured to house the first and second battery cell stacks and to be opened on both sides; end plates disposed on the opened both sides of the pack case; first and second pressing plates located inside the pack case and disposed between the first battery cell stack and the second battery cell stack; and a pressing unit disposed between the first and second pressing plates to apply pressure to the first and second battery cell stacks.

## Description

### TECHNICAL FIELD

### Cross Citation with Related Application(s)

This application claims priority to and the benefit of Korean Patent Application No. 10-2024-0169601 filed on November 25, 2024 with the Korean Intellectual Property Office, the disclosure of which is incorporated herein by reference in its entirety.

The present disclosure relates to a battery pack and a device including the same, and more particularly, to a battery pack comprising a pressing unit disposed between end plates to apply pressure to a battery cell stack, and a device including the same.

### BACKGROUND

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low selfdischarge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior material, i.e., a battery case which seals and accommodates the electrode assembly together with an electrolyte.

In general, the lithium secondary battery may be classified into a can-type secondary battery in which the electrode assembly is embedded in a metal can, and a pouch-type secondary battery in which the electrode assembly is embedded in a pouch of an aluminum laminate sheet, according to the shape of the exterior material.

In the case of the secondary batteries used in small-sized devices, two or three battery cells are disposed, but in the case of the secondary batteries used in medium and large-sized devices, such as automobiles, a battery module in which the plurality of battery cells are electrically connected is used. The plurality of battery cells are connected to each other in series or in parallel to form a cell assembly, so that the battery module has improved capacity and output. One or more battery modules may be mounted together with various control and protection systems, such as a battery management system (BMS), a battery disconnect unit (BDU) and a cooling system to form a battery pack.

A battery pack may include a battery module as a subordinate concept thereof, and the battery module may include a battery cell as a subordinate concept thereof. In addition, the number of battery cells included in the battery module or the number of battery modules included in the battery pack may be variously determined according to the output or capacity of the battery pack required for an electric vehicle or an energy storage system (ESS).

Meanwhile, all-solid-state batteries, which are attracting attention as the nextgeneration batteries, are type of battery that replaces a liquid-state electrolyte in a conventional lithium-ion battery with a solid one. For the solid-state electrolyte to smoothly transfer ions, a high pressure in the range of 5 to 10 MPa must be applied to the battery. Considering the area of the battery cell, a very large force amounting to several tons is required to achieve such high pressure, and it is not easy to realize this stably in the assembly process.

Therefore, in order to apply the high pressure required for all-solid-state batteries and the like to the battery cells, a special pressing structure different from conventional structures is required.

### DETAILED DESCRIPTION OF THE INVENTION

### Technical Problem

It is an object of the present disclosure to press a battery cell stack at a high pressure level using a pressing unit disposed between end plates.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is a battery pack comprising: first and second battery cell stacks formed by stacking a plurality of battery cells; a pack case configured to house the first and second battery cell stacks and to be opened on both sides; end plates disposed on the opened both sides of the pack case; first and second pressing plates located inside the pack case and disposed between the first battery cell stack and the second battery cell stack; and a pressing unit disposed between the first and second pressing plates to apply pressure to the first and second battery cell stacks.

In an embodiment, the first battery cell stack and the second battery cell stack may be disposed so as to be spaced apart from each other along a longitudinal direction of the battery pack, the first pressing plate may cover one surface of both the side surfaces of the first battery cell stack, and the second pressing plate may cover one surface of both the side surfaces of the second battery cell stack.

In an embodiment, the pressing unit may comprise: a first bolt formed on the first pressing plate so as to protrude from the first pressing plate toward the second pressing plate; a second bolt formed on the second pressing plate so as to protrude in a direction toward the first pressing plate from the second pressing plate; and a nut disposed between the first bolt and the second bolt to connect the first bolt and the second bolt.

In an embodiment, one side of the first bolt may be inserted into one side of the nut, and one side of the second bolt may be inserted into the other side of the nut, so that the first bolt and the second bolt may be connected together.

In an embodiment, the first bolt may comprise a first screw thread, and the second bolt may comprise a second screw thread which is inclined in a direction opposite to the first screw thread, based on a direction perpendicular to the movement direction of the first bolt and the second bolt.

In an embodiment, one side of the nut may be formed with a first screw groove into which the first screw thread is inserted, and the other side of the nut may be formed with a second screw groove which is inclined in a direction opposite to the first screw groove so that the second screw thread is inserted therein.

In an embodiment, as the nut rotates in one direction, the first bolt moves in a direction toward the first battery cell stack, and the second bolt moves in a direction toward the second battery cell stack, so that the first battery cell stack and the second battery cell stack may be simultaneously pressed.

In an embodiment, the other side of the first bolt may be embedded in the first pressing plate and formed integrally with the first pressing plate, and the other side of the second bolt may be embedded in the second pressing plate and formed integrally with the second pressing plate.

In an embodiment, the pressing unit is provided in plurality, and the plurality of pressing units may be disposed along a direction perpendicular to the longitudinal direction of the battery pack.

In an embodiment, the plurality of pressing units may be disposed to be spaced apart at equal intervals.

In an embodiment, the plurality of battery cells may be stacked along the longitudinal direction of the battery pack.

In an embodiment, the pressing unit may press the first battery cell stack and the second battery cell stack along the stacking direction of the plurality of battery cells.

In an embodiment, the end plate may comprise: a first end plate that covers the other side of both the side surfaces of the first battery cell stack; and a second end plate that covers the other side of both the side surfaces of the second battery cell stack.

In an embodiment, the first end plate may be disposed so as to cover the other surface of the first battery cell stack and one end of the pack case, and the second end plate may be disposed so as to cover the other surface of the second battery cell stack and the other end of the pack case.

In an embodiment, the battery pack may further comprise a pressing pad disposed between the plurality of battery cells so as to be in contact with the plurality of battery cells.

In an embodiment, the pressing pad may be disposed in the space between mutually adjacent battery cells among the plurality of battery cells and assist the pressing unit in applying pressure.

In an embodiment, the plurality of battery cells each may comprise a solid-state electrolyte.

According to another aspect of the present disclosure, provided is a device comprising the battery pack.

### Advantageous Effects

According to embodiments of the present disclosure, the battery cell stack can be pressed at high pressure using a pressing unit disposed between end plates, enabling the realization of high pressure of the solid-state electrolyte even in an all-solid-state battery, and allowing ions to be smoothly transferred.

The effects of the present disclosure are not limited to the effects mentioned above, and additional other effects not described above will be clearly understood from the description of the appended claims by those skilled in the art.

### BRIEF DESCRIPTION OF THE DRAWINGS

FIG. 1 is a perspective view of a battery pack according to an embodiment of the present disclosure.
FIG. 2 is a plan view of a battery pack according to an embodiment of the present disclosure, showing a state in which the upper plate is removed.
FIG. 3 is an enlarged view of a section A in FIG. 2, showing the structure of a pressing unit according to an embodiment of the present disclosure.
FIG. 4 is a diagram showing a battery cell stack pressing structure of a battery module or battery pack of a comparative example, as a comparative example of the present disclosure.

### DETAILED DESCRIPTION OF THE EMBODIMENTS

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are shown to be exaggerated.

In addition, it will be understood that when a layer, film, region, plate or the like is arranged "on" a specific part, the description includes not only a case where the layer, film, region, plate or the like is arranged "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Meanwhile, although terms representing directions such as upward, downward, left, right, forward, and backward are used in the present embodiment, it would be obvious to those skilled in the art that these terms are only for convenience of explanation and may vary depending on the location of the target object or the location of the observer.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

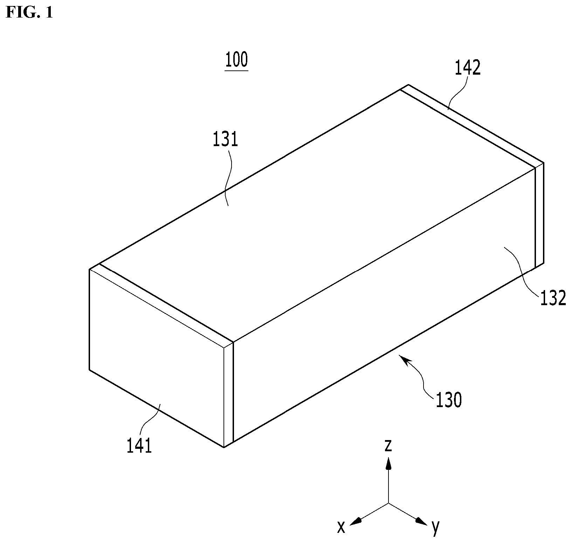

Before describing the battery pack 100 according to the present disclosure, the longitudinal direction of the battery pack 100 refers to the direction in which the first end plate 141 and the second end plate 142 face each other (the x-axis direction in the figure). The width direction of the battery pack 100 refers to the direction in which the side plates 132 face each other (the y-axis direction in the figure). The height direction of the battery pack 100 refers to the direction perpendicular to the longitudinal and width directions of the battery pack 100 (the z-axis direction in FIG. 1).

FIG. 1 is a perspective view of a battery pack 100 according to an embodiment of the present disclosure.

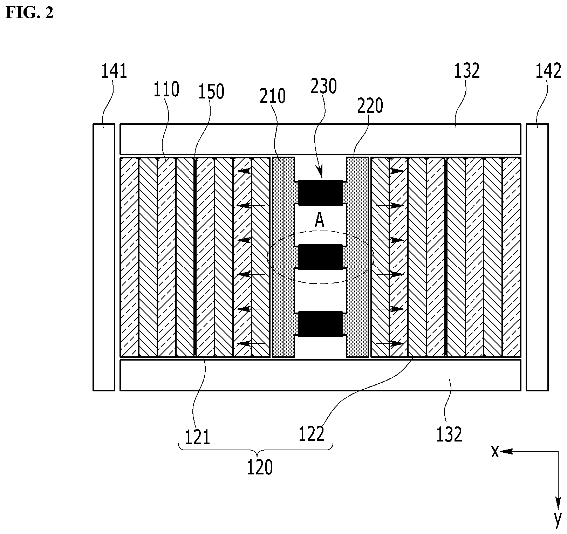

FIG. 2 is a plan view of a battery pack according to an embodiment of the present disclosure, showing a state in which the upper plate is removed.

Referring to FIGS. 1 and 2, a battery pack 100 may include a plurality of battery cell stacks 120 in which a plurality of battery cells 110 are stacked in one direction (the x-axis direction in FIG. 2), a pack case 130 configured to house the plurality of battery cell stacks 120 and to be opened on both sides, end plates 141, 142 and pressing plates 210, 220 that cover both side surfaces of each of the plurality of battery cell stacks 120, and a pressing unit 230 disposed between the pressing plates 210, 220 to apply pressure to the battery cell stacks 120.

The battery cell stack 120 housed in the pack case 130 may be formed by stacking a plurality of battery cells 110 in one direction. The plurality of battery cells 110 may be stacked along the longitudinal direction of the battery pack 100. Here, the longitudinal direction of the battery pack 100 refers to the direction in which the first end plate 141 and the second end plate 142 face each other (the x-axis direction in the figure). The battery cell 110 may be a pouch-type battery cell. The battery cell 110 may be manufactured by housing the electrode assembly in a pouch case made of a laminate sheet including a resin layer and a metal layer, and then thermally fusing the sealing part of the pouch case. The battery cells 110 may be configured in plurality, and the plurality of battery cells 110 may form a battery cell assembly 120 that is stacked so as to be electrically connected to each other. The battery cell 110 may be an all-solid-state battery including a solid-state electrolyte.

The plurality of battery cell stacks 120 may include a first battery cell stack 121 and a second battery cell stack 122. The first battery cell stack 121 and the second battery cell stack 122 may be disposed so as to be spaced apart from each other along a longitudinal direction of the battery pack 100. Both side surfaces of the first battery cell stack 121 may be covered by a first pressing plate 210 and a first end plate 141. Both side surfaces of the second battery cell stack 122 may be covered by a second pressing plate 220 and a second end plate 142. A pressing unit 230 may be disposed between the first battery cell stack 121 and the second battery cell stack 122.

A pressing pad 150 may be disposed between the battery cells 110. The pressing pad 150 may be disposed between the plurality of battery cells 110 so as to be in contact with the plurality of battery cells 110. The pressing pad 150 may be disposed between the battery cells so as to be in contact with the two battery cells 110 among the plurality of battery cells 110. The pressing pad 150 may be disposed so as to be in contact with mutually adjacent battery cells 110 in the space between mutually adjacent battery cells 110. The pressing pad 150 may be disposed between the plurality of battery cells 110 and assist the pressing unit 230 in applying pressure to the battery cell stack 120.

The pack case 130 may include an upper plate 131 that covers the upper surface of a plurality of battery cell stacks 120, a lower plate on which the battery cell stacks 120 are seated, and side surface plates 132 formed to protrude from both edges of the lower plate. Both edges of the lower plate may be portions that face each other along the width direction of the battery pack 100 (the y-axis direction in FIGS. 1 and 2).

The battery pack 100 may include a plurality of pressing plates 210, 220 and a plurality of end plates 141, 142. More specifically, the battery pack 100 may include a first pressing plate 210, a second pressing plate 220, a first end plate 141, and a second end plate 142. The first pressing plate 210 may cover one surface of both the side surfaces of the first battery cell stack 121. The second pressing plate 220 may cover one surface of both the side surfaces of the second battery cell stack 122. The first pressing plate 210 and the second pressing plate 220 may be located inside the pack case 130. The first end plate 141 may cover the other side of both the side surfaces of the first battery cell stack 121. The second end plate 142 may cover the other side of both the side surfaces of the second battery cell stack 122. The first end plate 141 and the second end plate 142 may be located on the opened both sides of the pack case 130.

The first pressing plate 210 and the second pressing plate 220 may be disposed adjacent to each other while facing each other. A pressing unit 230 may be disposed between the first pressing plate 210 and the second pressing plate 220 to apply pressure to the battery cell stack 120.

The first end plate 141 and the second end plate 142 may be disposed on the opened both sides of the pack case 130. As shown in FIGS. 1 and 2, the first end plate 141 and the second end plate 142 may be disposed so that at least a portion of them overlap with the pack case 130. Specifically, the first end plate 141 may be disposed so as to cover the other surface of the first battery cell stack 121 and one end of the pack case 130. The second end plate 142 may be disposed so as to cover the other surface of the second battery cell stack 122 and the other end of the pack case 130. The first end plate 141 and the second end plate 142 may cover not only one side surface of the first battery cell stack 121 and the second battery cell stack 122, but also one end and the other end of the pack case 130, thereby completing one battery pack 100.

The pressing unit 230 is disposed between the first battery cell stack 121 and the second battery cell stack 122, which are covered by the end plates 141, 142 and the pressing plates 210, 220, and can apply pressure to the first battery cell stack 121 and the second battery cell stack 122. More specifically, the first pressing plate 210, which covers one surface of both the side surfaces of the first battery cell stack 121, and the second pressing plate 220, which covers one surface of both the side surfaces of the second battery cell stack 122, can be disposed adjacent to each other while facing each other, and the pressing unit 230 may be disposed between the first pressing plate 210 and the second pressing plate 220. The pressing unit 230 is disposed between the first pressing plate 210 and the second pressing plate 220 and can apply pressure to both the first battery cell stack 121 and the second battery cell stack 122.

As previously described, the first battery cell stack 121 and the second battery cell stack 122 may be disposed so as to be spaced apart from each other along the longitudinal direction of the battery pack 100. A plurality of battery cells 110 may be stacked along the longitudinal direction of the battery pack 100. The pressing unit 230 may be disposed between the first battery cell stack 121 and the second battery cell stack 122. Therefore, the pressing unit 230 may apply pressure to the battery cell stack 120 in the stacking direction of the battery cells 110.

Additionally, as shown in FIG. 2, the pressing unit 230 may be provided in plurality. In order to ensure that the battery cells 110 stacked along the longitudinal direction of the battery pack 100 is pressed in the stacking direction, the plurality of pressing units 230 may be disposed along a direction perpendicular to the stacking direction of the battery cells 110, i.e., a direction perpendicular to the longitudinal direction of the battery pack 100. The plurality of pressing units 230 may be disposed along the width and/or height direction of the battery pack 100. The plurality of pressing units 230 may be disposed to be spaced apart at equal intervals. Thereby, it is possible to apply uniform pressure to one surface of the first battery cell stack 121 in contact with the first pressing plate 210 and one surface of the second battery cell stack 122 in contact with the second pressing plate 220.

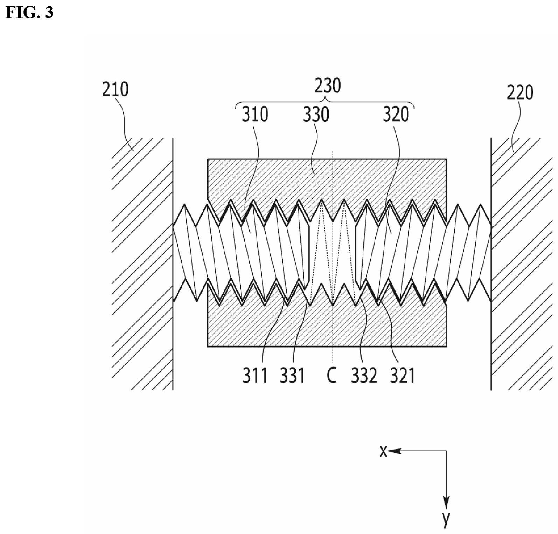

FIG. 3 is an enlarged view of a section A in FIG. 2, showing the structure of a pressing unit according to an embodiment of the present disclosure.

Referring to FIG. 3, the pressing unit 230 according to an embodiment of the present disclosure may include a first bolt 310 formed on a first pressing plate 210, a second bolt 320 formed on a second pressing plate 220, and a nut 330 disposed between the first bolt 310 and the second bolt 320 to connect the first bolt 310 and the second bolt 320. The first bolt 310 may be formed on the first pressing plate 210 so as to protrude from the first pressing plate 210 toward the second pressing plate 220. The second bolt 320 may be formed on the second pressing plate 220 so as to protrude from the second pressing plate 220 toward the first pressing plate 210. One side of the first bolt 310 is inserted into one side of the nut 330, and one side of the second bolt 320 is inserted into the other side of the nut 330, so that first bolt 310 and the second bolt 320 can be connected together. The other side of the first bolt 310 may be coupled to the first pressing plate 210, and formed integrally with the first pressing plate 210. The other side of the second bolt 320 may be coupled to the second pressing plate 220 and formed integrally with the second pressing plate 220. In this case, the other side of the first bolt 310 may be embedded in the first pressing plate 210, and the other side of the second bolt may be embedded in the second pressing plate 220.

Further, as shown in FIG. 3, the screw threads 311, 321 of the first bolt 310 and the second bolt 320 may be formed in opposite directions to each other. Correspondingly, the screw grooves 331, 332 may be formed on one side and the other side of the nut 330 in opposite directions to each other. More specifically, the first screw thread 311 of the first bolt 310 and the second screw thread 321 of the second bolt 320 may be formed to be inclined in opposite directions to each other, and correspondingly, the first screw groove 331 formed on one side of the nut 330 and the second screw groove 332 formed on the other side may be formed to be inclined in opposite directions to each other. For example, as shown in FIG. 3, based on a line along a direction (the y-axis direction of FIG. 3) perpendicular to the movement direction (the x-axis direction of FIG. 3) of the first bolt 310 and the second bolt 320, the first screw thread 311 of the first bolt 310 may have a shape which is inclined to the left side, and the second screw thread 321 of the second bolt 320 may have a shape which is inclined to the right side. Correspondingly, the first screw groove 331 formed on one side (the left end from the middle point C) of the nut 330 into which the first bolt 310 is inserted may have a shape which is inclined to the left side, and the second screw groove 332 formed on the other side (the right end from the middle point C) of the nut 330 into which the second bolt 320 is inserted may have a shape which is inclined to the right side. When the nut 330 is rotated in one direction in a state where the first screw thread 311 of the first bolt 310 is inserted into the first screw groove 331 formed on one side of the nut 330, the first bolt 310 moves in a direction toward the first pressing plate 210 covering the side surface of the first battery cell stack 121, thereby applying pressure to the first battery cell stack 121. Meanwhile, the second screw thread 321 of the second bolt 320 and the second screw groove 332 formed on the other side of the nut 330 each have a shape which is inclined in the opposite direction to the first screw thread 311 and the first screw groove 331, and therefore, when the nut 330 rotates in one direction in a state where the second screw thread 321 of the second bolt 320 is inserted into the second screw groove 332 formed on the other side of the nut 330, the second bolt 320 moves in a direction toward the second pressing plate 220, which is the direction opposite to the first bolt 310, thereby apply pressure to the second battery cell stack 122 located on the opposite side of the first battery cell stack 121. As a result, the first bolt 310 and the second bolt 320 may include screw threads 311, 321 which are inclined in opposite directions to each other, and one side and the other side of the nut 330 may have screw grooves 331, 332 which are inclined in opposite directions to each other. Therefore, when the nut 330 rotates in one direction in a state where the first bolt 310 and the second bolt 320 are inserted into one side and the other side of the nut 330, the first bolt 310 and the second bolt 320 move in opposite directions to each other, so that the first battery cell stack 121 and the second battery cell stack 122 can be pressed simultaneously with high pressure.

As such, since the battery pack 100 according to an embodiment of the present disclosure includes a pressing unit 230 comprised of bolts 310, 320 and nuts 330, the assembly can be performed by adjusting the degree of fastening (tightening) of the bolts 310, 320 and the nut 330 from the initial stage, i.e., the manufacturing stage of the battery pack 100, so that the pressure necessary to prevent the swelling of the battery cells 110 or to ensure smooth ion transfer in the all-solid-state battery is applied to the battery cell stack 120. In addition, the battery cell stack 120 can be continuously pressed during operation of the battery pack 100 by the bolts 310, 320 and the nut, which are fastened to apply the necessary pressure to the battery cell stack 120 from the assembly stage.

Furthermore, the pressing unit 230 according to the present disclosure is made of rigid bodies, namely bolts 310, 320 and a nut 330, whose shape remains unchanged. The bolts 310, 320 are embedded in the pressing plates 210, 220 and formed integrally, thereby easily achieving the high pressure required for all-solid-state batteries and the like.

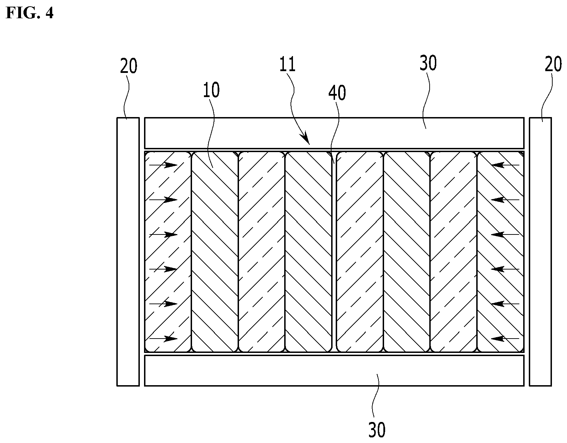

FIG. 4 is a diagram showing a battery cell stack pressing structure of a battery module or battery pack of a comparative example, as a comparative example of the present disclosure.

Below, the pressing structure and effects of the battery cell stack 120 of a battery pack 100 according to an embodiment of the present disclosure will be described in detail with reference to FIGS. 2 to 4.

First, referring to FIG. 4, a conventional battery module or battery pack may include a battery cell stack 11 formed by stacking a plurality of battery cells 10, and an end plate 20 and a side surface plate 30 covering the front and rear surfaces and both side surfaces of the battery cell stack 11. The conventional battery module or battery pack do not include a separate pressing member disposed between the battery cell stacks 11, it applies pressure to the battery cell stack 11 using only the end plate 20 and the pressing pad 40. In addition, even if an elastic member such as a separate spring that applies pressure to the battery cell stack 11 is further disposed, it is possible to realize a low pressing force enough to partially suppress the swelling of battery cells containing liquid-state electrolyte, but there is a limit in suppressing the swelling of the battery cells, and the high pressing force required for smooth ion transfer in all-solid-state batteries cannot be realized.

Meanwhile, referring to FIGS. 2 and 3, a battery pack 100 according to an embodiment of the present disclosure may include a pressing unit 230 disposed between a first battery cell stack 121 and a second battery cell stack 122, which are disposed so as to be spaced apart from each other along a longitudinal direction of the battery pack 100. The pressing unit 230 can apply pressure to the battery cell stack 120 using the fastening force of rigid bodies, namely the bolts 310, 320 and nut 330. The respective bolts 310, 320 can be embedded in the pressing plates 210, 220 and formed integrally and firmly. Therefore, because a very high level of pressing force can be achieved, the swelling of the battery cells can be effectively suppressed, and the high pressure conditions required for smooth ion transfer in an all-solid-state battery can be satisfied. Further, the pressing force can be easily controlled by adjusting only the degree of tightening of the bolts 310, 320 and the nut 330.

Further, the pressing unit 230 according to the present disclosure invention may be provided in plurality, and the plurality of pressing units 230 may be arranged in a direction perpendicular to the stacking direction of the battery cells 110. Thereby, it is also possible to press the battery cell stack 120 with a higher pressure. Further, the plurality of pressing units 230 are disposed to be spaced apart at equal intervals, so that the battery cell stack 120 can be pressed uniformly.

The battery pack 100 according to an embodiment of the present disclosure may be constituted of battery modules. In this case, one or more of the battery modules can be packaged in a pack case to form a battery pack.

The above-mentioned battery module and battery pack including the same can be applied to various devices. Such a device can be applied to a vehicle means such as an electric bicycle, an electric vehicle, or a hybrid vehicle, but the present disclosure is not limited thereto, and is applicable to various devices capable of using a battery module and a battery pack including the same, which also falls under the scope of the present disclosure

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: battery pack
110: battery cell
120: battery cell stack
121: first battery cell stack
122: second battery cell stack
130: pack case
131: upper plate
132: side surface plate
141: first end plate
142: second end plate
150: pressing pad
210: first pressing plate
220: second pressing plate
230: pressing unit
310: first bolt
311: first screw thread
320: second bolt
321: second screw thread
330: nut
331: first screw groove
332: second screw groove

## Claims

1. A battery pack comprising:
first and second battery cell stacks formed by stacking a plurality of battery cells;
a pack case configured to house the first and second battery cell stacks and to be opened on both sides;
end plates disposed on the opened both sides of the pack case;
first and second pressing plates located inside the pack case and disposed between the first battery cell stack and the second battery cell stack; and
a pressing unit disposed between the first and second pressing plates to apply pressure to the first and second battery cell stacks.

2. The battery pack of claim 1,
wherein the first battery cell stack and the second battery cell stack are disposed so as to be spaced apart from each other along a longitudinal direction of the battery pack,
the first pressing plate covers one surface of both the side surfaces of the first battery cell stack, and
the second pressing plate covers one surface of both the side surfaces of the second battery cell stack.

3. The battery pack of claim 2,
wherein the pressing unit comprises:
a first bolt formed on the first pressing plate so as to protrude from the first pressing plate toward the second pressing plate;
a second bolt formed on the second pressing plate so as to protrude in a direction toward the first pressing plate from the second pressing plate; and
a nut disposed between the first bolt and the second bolt to connect the first bolt and the second bolt.

4. The battery pack of claim 3,
wherein one side of the first bolt is inserted into one side of the nut, and one side of the second bolt is inserted into the other side of the nut, so that the first bolt and the second bolt are connected together.

5. The battery pack of claim 4,
wherein the first bolt comprises a first screw thread, and
the second bolt comprises a second screw thread which is inclined in a direction opposite to the first screw thread, based on a direction perpendicular to the movement direction of the first bolt and the second bolt.

6. The battery pack of claim 5,
wherein one side of the nut is formed with a first screw groove into which the first screw thread is inserted, and
the other side of the nut is formed with a second screw groove which is inclined in a direction opposite to the first screw groove so that the second screw thread is inserted therein.

7. The battery pack of claim 6,
wherein as the nut rotates in one direction, the first bolt moves in a direction toward the first battery cell stack, and the second bolt moves in a direction toward the second battery cell stack, so that the first battery cell stack and the second battery cell stack are simultaneously pressed.

8. The battery pack of claim 4,
wherein the other side of the first bolt is embedded in the first pressing plate and formed integrally with the first pressing plate, and
the other side of the second bolt is embedded in the second pressing plate and formed integrally with the second pressing plate.

9. The battery pack of claim 2,
wherein the pressing unit is provided in plurality, and
the plurality of pressing units are disposed along a direction perpendicular to the longitudinal direction of the battery pack.

10. The battery pack of claim 9,
wherein the plurality of pressing units are disposed to be spaced apart at equal intervals.

11. The battery pack of claim 1,
wherein the plurality of battery cells are stacked along the longitudinal direction of the battery pack.

12. The battery pack of claim 11,
wherein the pressing unit presses the first battery cell stack and the second battery cell stack along the stacking direction of the plurality of battery cells.

13. The battery pack of claim 2,
wherein the end plate comprises:
a first end plate that covers the other side of both the side surfaces of the first battery cell stack; and
a second end plate that covers the other side of both the side surfaces of the second battery cell stack.

14. The battery pack of claim 13,
wherein the first end plate is disposed so as to cover the other surface of the first battery cell stack and one end of the pack case, and
the second end plate is disposed so as to cover the other surface of the second battery cell stack and the other end of the pack case.

15. The battery pack of claim 11,
further comprising a pressing pad disposed between the plurality of battery cells so as to be in contact with the plurality of battery cells.

16. The battery pack of claim 15,
wherein the pressing pad is disposed in the space between mutually adjacent battery cells among the plurality of battery cells and assist the pressing unit in applying pressure.

17. The battery pack of claim 1,
wherein the plurality of battery cells each comprise a solid-state electrolyte.

18. A device comprising the battery pack of claim 1.
